# EUROPÄISCHE PATENTANMELDUNG

(11) **EP 2 397 279 A1**
(43) Veröffentlichungstag der Anmeldung: **21.12.2011**
(21) Anmeldenummer: 11450074.7
(22) Anmeldetag: 14.06.2011
(51) Int. Cl.: B25J 9/04, B25J 9/10

(54) **Knickarmroboter mit Armantrieb**

(30) Priorität: 15.06.2010 DE 102010023788
(71) Anmelder: EB-invent GmbH, 72213 Altensteig-Walddorf (DE)
(72) Erfinder: Ehrenleitner, Franz, 72213 Altensteig-Walddorf (DE)
(74) Vertreter: Patentanwälte Barger, Piso & Partner

(57) **Zusammenfassung**

Die Erfindung betrifft einerseits einen Antrieb für die Rotation eines Basisarms (7) eines Knickarmroboters (1) um eine Basisachse (3) einer Basis (6), mit einem Antriebsmotor (30) und gegebenenfalls mit einem Getriebe, dadurch gekennzeichnet, dass der Motor (30) auf der Basis (6) montiert ist und auf eine drehfest mit seiner Abtriebswelle verbundene Basiskoppel (31) wirkt, die gelenkig mit einer Basistreibstange (32) verbunden ist, die gelenkig am Basisarm (7) angreift.

Die Erfindung betrifft andererseits auch einen Antrieb für die Rotation eines Endarms (8) eines Knickarmroboters (1) um eine Handachse (4) eines Basisarms (7), mit einem Antriebsmotor (29) und gegebenenfalls mit einem Getriebe, dadurch gekennzeichnet, dass der Motor (29) auf eine, drehfest mit seiner Abtriebswelle, die mit einer Basisachse (3) eines Basisarms (7) fluchtet, verbundenen Koppelstange (28) wirkt, die gelenkig mit einer Treibstange (27) verbunden ist, die, gegebenenfalls über ein Gelenkviereck, am Endarm (8) angreift.

## Beschreibung

Die Erfindung betrifft einen Knickarmroboter mit einem Antrieb für den Basisarm bzw. den Endarm entsprechend dem Oberbegriff des Anspruches 1 bzw. 2 und den in den Figs. 94 und 95 der WO 2006/039730 des Anmelders dargestellten Knickarmrobotern.

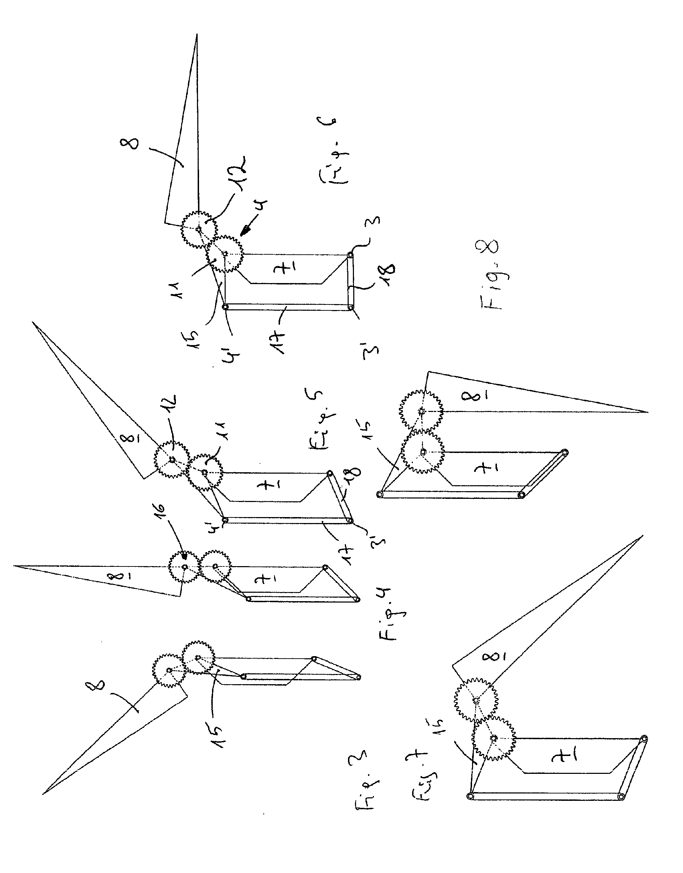

Es gibt zahlreiche Antriebe für Knickarmroboter und ähnliche Vorrichtungen, darunter die folgenden:
Die DE 33 24 948 C2 macht über den Antrieb des Basisarms keinerlei Aussagen, nach der Anordnung der Motoren handelt es sich um einen völlig konventionellen Aufbau.
Die DE 10 2009 034 268 A1, die auf den Anmelder zurückgeht und die Energieversorgung von Arbeitsmaschinen betrifft, offenbart in Fig. 4 einen Knickarmroboter, bei dem der Basisarm insofern indirekt angesteuert wird, als die Lage der Achse zwischen Basisarm und Endarm über ein Gestänge bestimmt wird. Das dazu verwendete Gestänge benutzt einen Linearmotor, der auf den Scheitel eines klappbaren Dreieckes wirkt, dessen einer Basiseckpunkt auf der Basis befestigt ist und dessen anderer Basiseckpunkt mit der Achse zwischen den beiden Armen zusammenfällt. Der Antrieb für den Endarm erfolgt über Linearmotoren, die, von der Basis aus, die Verdrehung um die Zwischenarmachse über eine starre Konstruktion in Form einer Pyramide bewirken.
Die DE 20 2007 006 113 U1 offenbart einen Roboter, der praktisch genau dem eingangs genannten entspricht, der Basisarm wird direkt angetrieben, der Endarm über ein Gelenkviereck.
Die DE 20 2004 017 396 U1 offenbart keinen Knickarmroboter, sondern einen Handhabungsautomaten, mit besonderem Bewegungsablauf, der durch eine doppelte Kulissenführung erreicht wird. Es gibt daher nur die zwangsmäßig zusammengesetzte, durch den Pfeil 8 angedeutete Bewegung, ohne jeden Einzelantrieb.
Die DE 20 2004 012 584 U1 betrifft einen Roboter mit Knickarm oder mehreren Armgliedern, dabei wird der Basisarm direkt über ein Zahnrad im Arm durch ein Ritzel eines Motors in der Basis angetrieben, die weiteren Armglieder werden über Ketten oder dgl. ebenfalls von Motoren in der Basis angetrieben.
Die FR26 08 737 A1 offenbart eine Art Nürnberger Schere und, in einer Ausgestaltung entsprechend der Fig. 5, eine "Kurzvariante" bei der die äußersten beiden Glieder der Nürnberger Schere direkt miteinander verbunden sind. Bei dieser Variante greift ein Linearantrieb von der Basis aus auf dem Basisarm an und ein weiterer Linearantrieb verbindet die Schwenkachse zwischen Basis und Basisarm mit dem Endarm und bewegt auf diese Weise den letzteren.
Die DE 30 38 419 entsprechend der US 43 96 344 sieht als Erfindung an, dass ein auf herkömmliche Weise angeordneter Antrieb für den Basisarm mit einem Gelenkparallelogramm verbunden ist, dessen Basis allerdings die Schwenkbewegung des Basisarms mitmacht. Durch entsprechende Änderung der Winkellage zwischen der verdrehten Basis und dem Basisarm kann die Lage des Endarmes entsprechend geändert werden. Diese komplexe Art der Steuerung der Bewegung wird gewählt, weil im Inneren der Arme Seilzüge (bzw. Gestänge) laufen, durch die ein Tool-Center-Point am Ende des Endarmes stets in einer vorbestimmten Position gehalten wird. Diese Position kann durch entsprechendes Betätigen der Gestänge bzw. Zugmittel in der Basis justiert werden.
Die EP 960 982 offenbart einen Kran, bei dem zur besseren Bedienbarkeit die Kabine des Kranführers beweglich angeordnet ist. Die Konstruktion, mit der die Bewegung ausgeführt wird, entspricht zwei in Serie angeordneten Gelenksvierecken, deren Antrieb jeweils durch einen Linearantrieb erfolgt, der im Wesentlichen diagonal zu den als Gelenksparallelogramm ausgebildeten Gelenksvierecken verläuft.
Die WO 2006/039730, die auf den Anmelder zurückgeht, offenbart verschiedene Parallelkinematiken, mit linear wirkenden Aktuatoren, die bei Knickarmrobotern nicht gut verwendbar sind.

Gattungsgemäße Knickarmroboter weisen eine Plattform auf, die um eine vertikale Achse drehbar ist. Auf der Plattform ist eine horizontale Achse, die Basisachse angeordnet, die einen ersten Armabschnitt trägt, an dessen anderem Ende parallel zur ersten Drehachse wiederum eine Drehachse, die Armachse, vorgesehen ist, an der ein zweiter Armabschnitt angreift. Am freien Ende dieses zweiten Armschnittes ist, im Falle eines Roboters das eigentliche Werkzeug, im Falle eines Manipulators, der oft ähnlich aufgebaut ist, ein Greiforgan angeordnet. Das Werkzeug oder Greiforgan kann zumeist noch bezüglich des zweiten Armabschnittes bewegt werden, insbesondere um die Längsachse des zweiten Armabschnittes verdreht werden, verschiedentlich aber auch noch andere Bewegungen vollführen. Unabhängig von diesen Unterschieden wird diese Stelle bzw. dieser Bereich in der Beschreibung und den Ansprüchen einfach als Tool Center Point, abgekürzt TCP bezeichnet.

Nachteilig bei solchen Knickarmrobotern ist die allen seriellen Mechaniken inhärente Notwendigkeit, dass jede Führung und jeder Antrieb sämtliche, von ihm aus gesehen weiter zum freien Ende liegenden, Führung und Antriebe mitschleppen, tragen, beschleunigen und bremsen zu muss. Es kommt daher zu extrem schlechten Verhältnissen zwischen Nutzlast und Totlast, es müssen wegen der großen Masse starke Motoren verwendet werden, die wiederum zur Erhöhung der Masse und des Energiebedarfes beitragen, es müssen massive Lager vorgesehen werden, um die auftretenden dynamischen Kräfte mit ausreichend Steifigkeit aufnehmen zu können und dgl. mehr. Die Antriebe sind mit ihren Achsen fluchtend zu den Schwenkachsen angeordnet, um die gesamte Konstruktion steif und kompakt zu bauen.

Dazu kommt noch, dass bei der speziell als "seriell" bezeichneten Variante vorbekannter Knickarmroboter die Längsachsen des ersten Armabschnittes und des zweiten Armabschnittes im gestreckten Zustand nicht miteinander fluchten, sondern zueinander versetzt sind, wodurch Momente und Torsionsbeanspruchungen insbesondere im ersten, basisnahen, Knickarmabschnitt induziert werden, was eine weitere Verstärkung und Versteifung aller Bauteile notwendig macht.

Es gibt eine zweite Art vorbekannter Knickarmroboter, die so genannten "parallelen" Knickarmroboter, die allerdings nicht als parallelkinematische Vorrichtungen per se gelten, bei denen der Antrieb und das notwendige Getriebe an der Drehachse zwischen erstem und zweitem Armabschnitt (Armachse) vermieden wird, indem mittels eines Gelenkparallelogramms der Winkel zwischen dem zweiten und dem ersten Armabschnitt um die Verbindungsachse bestimmt wird. Dadurch kommt der Stellmotor für diese Achse ebenfalls auf die drehbare Basis, und die gesamte Konstruktion wird wesentlich entlastet; darüber hinaus ist es möglich, die beiden Armachsen in eine gemeinsame Ebene zu legen, so dass deren Längsachsen bei entsprechender 180° Stellung der beiden Armabschnitte miteinander fluchten, wodurch auch die oben genannten schädlichen Biege- und Torsionsmomente weitestgehend vermieden werden. Auch bei dieser Variante sind die Antriebe aus den gleichen Gründen wie oben genannt, mit ihren Achsen fluchtend zu den Schwenkachsen angeordnet.

Nachteilig bei dieser Konstruktion ist, dass die Beweglichkeit des freien Endes des zweiten Armabschnittes, somit des Tool-Center-Points, abgekürzt TCP, im Vergleich zum seriellen Knickarmroboter doch deutlich eingeschränkt ist. Insbesondere der Arbeitsbereich rund um die Vertikalachse geht verloren, auch der Bereich unterhalb der, Basisachse zwischen drehbarer Basis und erstem Armabschnitt ist wesentlich verringert.

Bei beiden Konstruktionen müssen die Antriebe auf das jeweils stärkste zu liefernde Drehmoment (Leistung) ausgelegt werden, da dieses Maximum stark von den durchfahrbaren Winkellagen der Arme abhängt, werden oft Kompromisse geschlossen, um die Kosten (und Massen) allzu großer Antriebe zu vermeiden; die parallelen Knickarmroboter geben hierfür ein Beispiel.

Es besteht somit ein Bedarf an einem Antrieb für einen Knickarmroboter, der eine reduzierte Eigenmasse aufweist, der zumindest in einer Ausgestaltung mit kostengünstigen Bauteilen herstellbar ist, der einen großen Arbeitsbereich besitzt und der dennoch mit geringer Antriebsleistung auskommt, ohne dabei "weich" in seinem Aufbau zu werden.

Erfindungsgemäß werden diese Ziele durch die jeweils im kennzeichnenden Teil der Ansprüche 1 und 2 angeführten Merkmale erreicht.

Mit anderen Worten, es erfolgt der Antrieb zumindest eines der zumindest zwei seriell angeordneten Arme, unabhängig davon, ob er direkt auf die Achse des Armes oder indirekt über ein Gelenkviereck als "angetriebenes Element" auf den Arm wirkt, nicht auf das jeweilige "angetriebene Element" direkt, sondern über ein (weiteres) Gelenkviereck, auf das der eigentliche Antrieb (Motor + Getriebe) wirkt.

Durch die passende Abstimmung der Längen (Abstand der Drehachsen) und der Winkellagen des Gelenkvierecks kann der über die möglichen Winkellagen der Arme auftretende Drehmomentverlauf in den Antrieben in weiten Grenzen beeinflusst werden. Insbesondere ist es möglich, die Spitzen des Drehmomentverlaufes zu minimieren.

Die Erfindung wird im Folgenden anhand der Zeichnung näher erläutert. Dabei zeigt bzw. zeigen
die Fig. 1 einen seriellen Knickarmroboter gemäß dem Stand der Technik,
die Fig. 2 einen parallelen Knickarmroboter gemäß dem Stand der Technik,
die Figs 3 bis 8, rein schematisch, eine erste Ausführungsform der Erfindung,
die Fig. 9 eine schematische Explosionsskizze der ersten Ausführungsform mit den wirkenden Kräften und Momenten,
die Fig. 10 eine Weiterbildung der Erfindung,
die Fig. 11 eine schematische Explosionsskizze der Weiterbildung mit den wirkenden Kräften und Momenten,
die Fig. 12 bis 17 eine Variante zur Weiterbildung,
die Fig. 18 eine Ausgestaltung der Weiterbildung und
die Fig. 19 bis 23 eine durchkonstruierte Ausführungsform in verschiedenen Positionen in perspektivischer Ansicht.

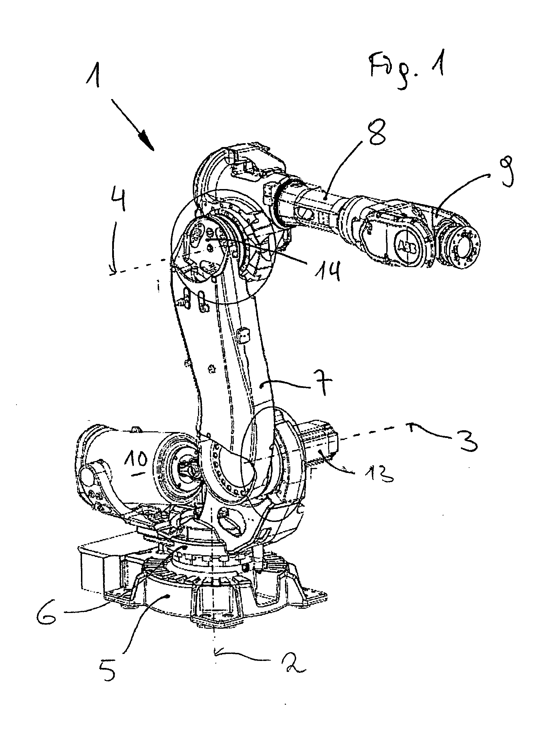

Die Fig. 1 zeigt einen seriellen Knickarmroboter gemäß dem Stand der Technik. Der Roboter 1 weist im Wesentlichen eine feste Basis 5 auf, auf der eine drehbare Basis 6 um eine Hochachse 2 drehbar befestigt ist. Dies drehbare Basis 6 trägt, um eine horizontale Basisachse 3 drehbar, einen Basisarm 7, an dessen anderen Ende um eine ebenfalls horizontal verlaufende und parallel zur Basisachse orientiert Armachse 4 ein Endarm 8 verdrehbar angeordnet ist, der an seinem freien Ende einen Werkzeugträger 9 aufweist. Weiters vorgesehen ist an der drehbaren Basis 6 eine Kompensationsvorrichtung 10, die die statischen Momentbelastungen zumindest teilweise kompensiert. Zur Bewerkstelligung der Drehung der einzelnen Teile um ihre Achsen sind Motoren vorgesehen, wobei insbesondere die Drehung des Endarmes 8 um die Armachse 4 von einem Motor mit Getriebe bewerkstelligt wird, der am Basisarm 7 im Bereich der Armachse 4 befestigt ist, so dass dieser Arm und seine Lagerung und sein Antriebsmotor stets den Motor bezüglich der Armachse 4 als tote Last mitbewegen muss.

Aus Fig. 1 ist auch deutlich zu erkennen, dass der Basisarm 7 quasi "neben" dem Endarm 8 sitzt, so dass es zu der schon oben erwähnten Biege- und Torsionsbelastung, speziell des Basisarms 7, kommt.

Für die Erfindung nicht ausschlaggebend, aber nicht unerwähnt soll bleiben, dass der Werkzeugträger 9 seinerseits wiederum die unterschiedlichsten Bewegungen bezüglich des Endarmes 8 vollführen kann und dass, wenn die Vorrichtung nicht als Arbeitsroboter sondern als Manipulator eingesetzt wird, der Werkzeugträger 9 die Form eines Greifers, eines Magneten, eines Hakens oder einer sonstigen Vorrichtung haben kann, die die jeweilige beabsichtigte Manipulation auszuführen in der Lage ist.

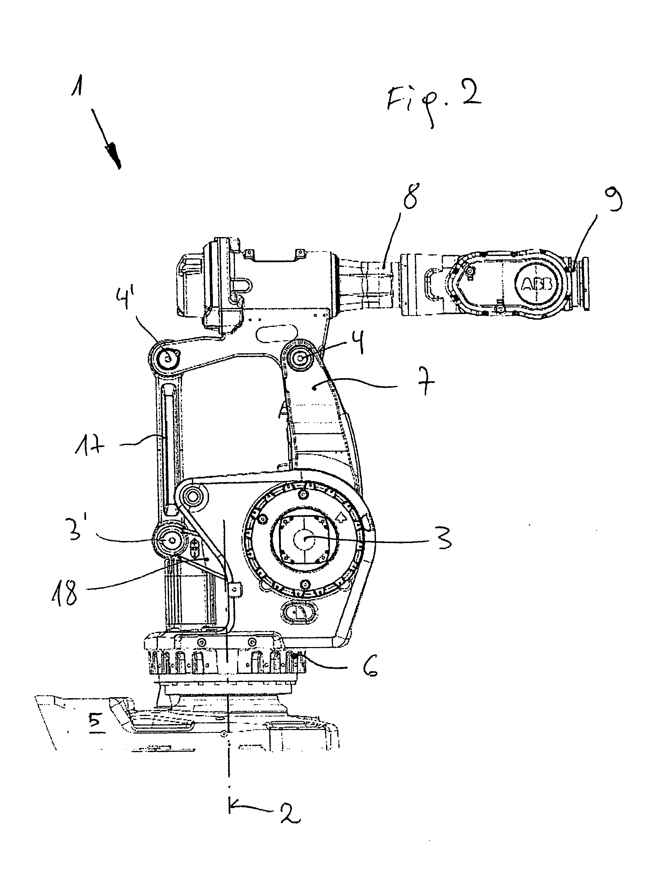

Um nun die Belastung des Basisarms 7 zu verringern wurde im Stand der Technik, wie aus Fig. 2 ersichtlich ist, ein so genannter paralleler Knickarmroboter 1 entwickelt, der den im Folgenden näher erläuterten Aufbau hat, wobei vergleichbare Bauteile mit gleichen Bezugszeichen wie in Fig. 1 versehen sind:

Beim parallelen Knickarmroboter, wie die Fig. 2 ihn zeigt, ist auf einer festen Basis 5, um eine Hochachse 2 drehbar, eine drehbare Basis 6 angeordnet. Diese trägt, um eine Basisachse 3 verschwenkbar, den Basisarm 7, an dessen oberem bzw. freiem Ende eine Armachse 4 vorgesehen ist, auf der ein Endarm 8 verschwenkbar gelagert ist. Der Endarm 8 ist nun in dem Bereich, der dem Werkzeugträger 9 abgewandt ist, verlängert ausgebildet und weist ein Lager um eine Armlenkerachse 4' auf, an der ein Basislenker 17 drehbar gelagert ist, dessen anderes, nahe der Drehbasis 6 befindliches Ende, ein Lager um eine Basislenkerachse 3' aufweist, an dem ein Steuerlenker 18 angreift. Dieser Steuerlenker 18 ist in seiner Orientierung bezüglich des Basisarms 7 beweglich und bewirkt auf diese Weise über das als Gelenkparallelogramm ausgebildete Viereck, mit den die Eckpunkte bildenden, zueinander parallelen Achsen 3, 4, 4', 3' die kinematische Kette aus, durch die der Endarm 8 um die Armachse 4 verschwenkt wird. Dazu gehörige Motor befindet sich auf der drehbaren Basis 6, er belastet somit den Basisarm 7 weder durch sein Gewicht noch beim Beschleunigen durch seine Masse.

Trotz dieser Vorteile haben sich wegen der deutlich größeren Reichweite die seriellen Knickarmroboter besser durchgesetzt, ein Vergleich der Fig. 1 mit der Fig. 2 zeigt, dass sowohl der zugängliche Winkelbereich des Basisarms 7 um die Basisachse 3 deutlich kleiner ist als beim seriellen Roboter, als auch der zugängliche Winkelbereich des Endarmes 8 um die Armachse 4. Speziell bei der Beweglichkeit nach oben und ganz besonders über den Zenit, somit über die verlängerte Hochachse hinaus, ist der parallele Knickarmroboter dem seriellen deutlich unterlegen.

Die Figs. 3 bis 6 zeigen nun, in rein schematischer Weise, die wichtigsten Elemente eines erfindungsgemäßen Knickarmroboters, wobei der besseren Übersichtlichkeit halber, mit Fig. 5 begonnen werden soll: Aus Gründen der Übersichtlichkeit ist auf die Darstellung der festen und der drehbaren Basis ebenso verzichtet worden, wie auf die Darstellung der unterschiedlichen Neigungen des Basisarms 7. Dieser ist in Fig. 3 bis 8 ausschließlich in vertikaler "Normallage" dargestellt und soll nur als Grundlage für die Erläuterung der Beweglichkeit des Endarmes 8 dienen. Dabei ist der Basisarm 7 als Trapez und der Endarm 8 als spitzwinkeliges Dreieck gezeigt, damit soll, aber ebenfalls nur rein schematisch, deren Umriss angedeutet werden.

Im dargestellten Ausführungsbeispiel erfolgt die Verbindung dieser beiden, für die Erläuterung der Kinematik, als starr anzusehenden Bauteile über ein Basiszahnrad 11 und ein Basiszahnrad 12. Das Basiszahnrad 11 ist fest und insbesondere drehfest mit dem Basisarm 7 verbunden, das Armzahnrad 12 fest und insbesondere drehfest mit dem Endarm 8. Durch entsprechende Lagerung in einem Verbindungselement 15 ist sichergestellt, dass die beiden Zahnräder stets im Eingriff miteinander bleiben, sodass der Mittelpunkt des Armzahnrads 12 einen Kreisbogen um den Mittelpunkt des Basiszahnrads 11 beschreibt. In der praktischen Ausführung ist selbstverständlich kein ganzes Zahnrad vorgesehen, es reicht, die benötigten Abschnitte passend ausgebildet auf den beiden Bauteilen vorzusehen, die Darstellung dient nur der Erläuterung der Kinematik. Am Verbindungselement 15 greift im Abstand der beiden Zahnradachsen eine Stellvorrichtung an, die dem Parallelogramm des parallelen Knickarmroboters, wie er in Fig. 2 dargestellt ist, gleicht, daher werden auch hier die gleichen Bezugszeichen verwendet:

Der Basisarm 7, der entsprechende Abschnitt des Verbindungselementes 15, der Basislenker 17 und der Steuerlenker 18 bilden ein Gelenkparallelogramm, dessen Winkellage von einem (nicht dargestellten) Motor im Bereich der Basisachse 3 bestimmt wird. Zufolge der Winkeländerung dieses Gelenkparallelogramms, wie durch einen Vergleich zwischen der Figs. 3 und 8 leicht ersichtlich ist, kommt es zu einer wesentlich größeren Winkeländerung des Endarmes 8 bezüglich des Basisarms 7.

Es ist nun ohne Weiters einsichtig, dass durch entsprechende Wahl der einzelnen Winkel bei einer willkürlich als Ausgangsstellung angenommenen Lage der einzelnen Bauteile und durch entsprechende Auswahl der Durchmesserverhältnisse der Zahnräder eine gute Beeinflussungsmöglichkeit des für den Endarm 8 bezüglich des Basisarms 7 erreichbaren Winkelbereiches um die Armachse 4 erzielt werden kann, ebenso kann dadurch der Kraft- bzw. Drehmomentverlauf beeinflusst werden. Es soll in diesem Zusammenhang aber speziell darauf hingewiesen werden, dass der Endarm 8 bei der erfindungsgemäßen Konstruktion keine reine Schwenkbewegung um die Armachse 4 vollführt, da sich das mit ihm verbundene Armzahnrad 12 am Basiszahnrad 11 abwälzt.

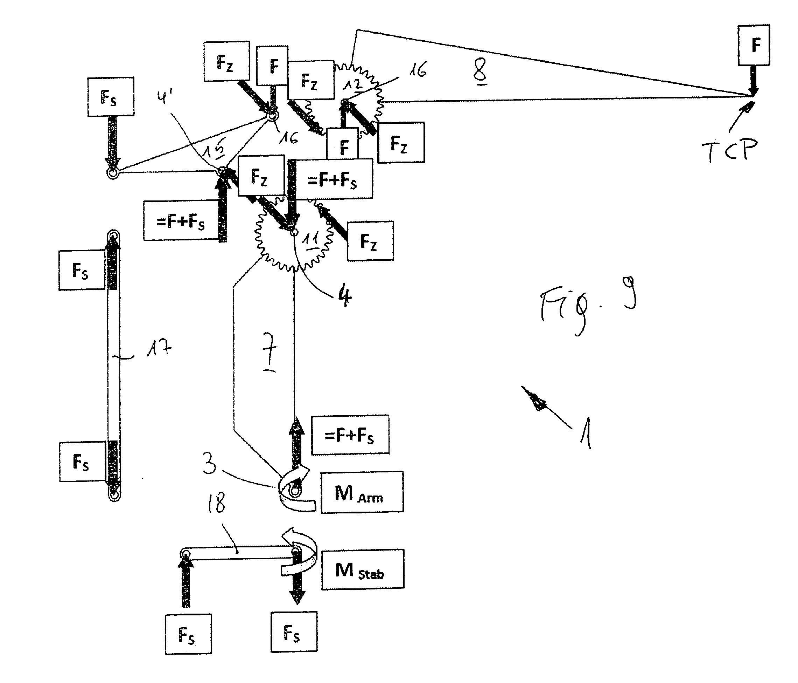

Aus Fig. 9 sind die auf die einzelnen Bauteile wirkenden Kräfte ersichtlich. Diese Darstellung wird hier gegeben, um eine interessante Eigenschaft der Vorrichtung näher zu erläutern:

Bei der Darstellung werden weder die durch Gewichte der einzelnen Bauteile bewirkten Kräfte berücksichtigt, noch Trägheitskräfte beim Beschleunigen oder Abbremsen, es wird nur die Ableitung der am TCP wirkenden Kraft F in die nachfolgenden Bauteile dargelegt. Am Endarm 8 wird dieser Kraft durch die im Lager des Armzahnrads 12 nach oben, entgegen der Kraft F wirkende Kraft F (hier wird stets nur vom Betrag gesprochen, die Orientierung ist aus der Zeichnung ersichtlich) das Gleichgewicht gehalten. Das zugehörige Moment von F um die Achse des Armzahnrads 12 wird durch das Gegenmoment der beiden am Armzahnrad 12 wirkenden Fz ausgeglichen.

Das Verbindungselement 15 unterliegt wiederum den Kräften F und Fz im Lager der Endachse 16, der Stangenkraft Fs, die stets in Richtung des Basislenkers 17 verlaufen muss und sich schlussendlich ergibt, der im Lager im Armlenkerachse 4' wirkenden vertikalen Kräfte F + Fs, und der die Kraft Fz austarierenden gleich großen Gegenkraft.

Der Basisarm 7 steht somit unter der vertikalen Wirkung der Kraft F + Fs und dem über das Basiszahnrad 11 wirkenden Moment Fz : Fz, während an seinem Lager um die Basisachse 3 nur die Gegenkraft F + Fs wirkt. Dies führt zu der überraschenden Folgerung, dass die auf die Vorrichtung 1 (im Ganzen gesehen) ein Drehmoment im Uhrzeigersinn (im dargestellten Beispiel) ausübende Kraft F im TCP auf den Basisarm 7 ein Drehmoment im Gegenuhrzeigersinn zufolge des Kräftepaares Fz : Fz ausübt. Das von der beweglichen Plattform bzw. vom Antrieb des Basisarms 7 ausgeübte Moment MArm hält dem Kräftepaar das Gleichgewicht.

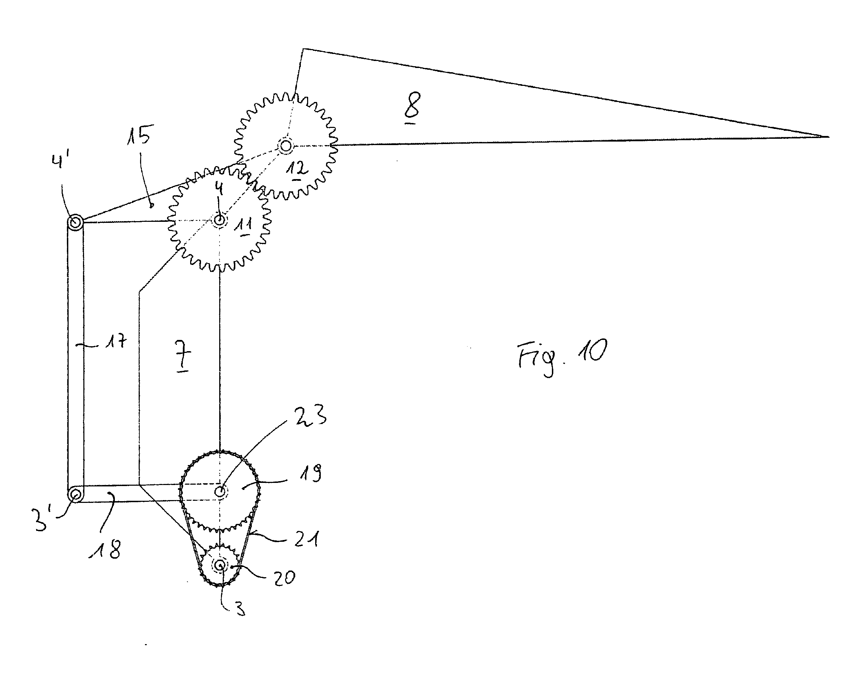

Aus der Kraft- und Momentenanalyse der Fig. 9 lässt sich in einer Ausgestaltung der Erfindung eine Konstruktion ableiten, durch die die Momentenverteilung optimiert wird, wodurch es gelingt, die Getriebemomente weiter zu verringern und so mit kleineren leichteren und daher kostengünstigeren Antrieben das Auslangen zu finden, die darüber hinaus im Betrieb weniger Energie benötigen, was gegenwärtig, zu Zeiten in denen auch Produktionshallen klimatisiert sind, noch dazu beiträgt, den Kühlbedarf abzusenken. Eine derartige Weiterbildung ist in Fig. 10 rein schematisch und anhand eines Beispiels mit einer Riemenübersetzung näher erläutert:

Am Basisarm 7 ist, mit dem Steuerlenker 18 drehfest verbunden, ein Steuerkettenrad, kurz nur Steuerrad 19 genannt, gelagert. Über ein Verbindungselement, dargestellt ist ein Riemen bzw. eine Kette 21, steht das Steuerrad 19 in Wirkverbindung mit einem Antriebsrad 20, das wiederum drehfest mit dem Getriebe und Antrieb in Verbindung steht, wobei dessen Gegenseite nicht mit dem Basisarm 7, sondern mit der (nicht dargestellten) drehbaren Basis 6 verbunden ist. Im dargestellten Ausführungsbeispiel weist das Antriebsrad 20 halben Durchmesser vom Steuerrad 19 auf, sodass eine Übersetzung ins Langsame von 1:2 vorliegt.

Auf diese Weise wird das Antriebsmoment für die Bewegung des Endarmes 8 halbiert und darüber hinaus auf den Basisarm 7 eine Kraft übertragen, durch die ein Moment induziert wird, welches dem Moment aus der Zahnflankenberührung des Zahnrades 11 entgegen wirkt und dieses auch aufhebt. Man kommt unter diesen Umständen zu einer Momentenableitung in die Getriebe bzw. Antriebe, wie bei Robotern gemäß dem Stand der Technik in paralleler Ausführung, hat jedoch den Vorteil, dass der Endarm 8 eine Beweglichkeit aufweist, die den seriellen Robotern zumindest nahe kommt.

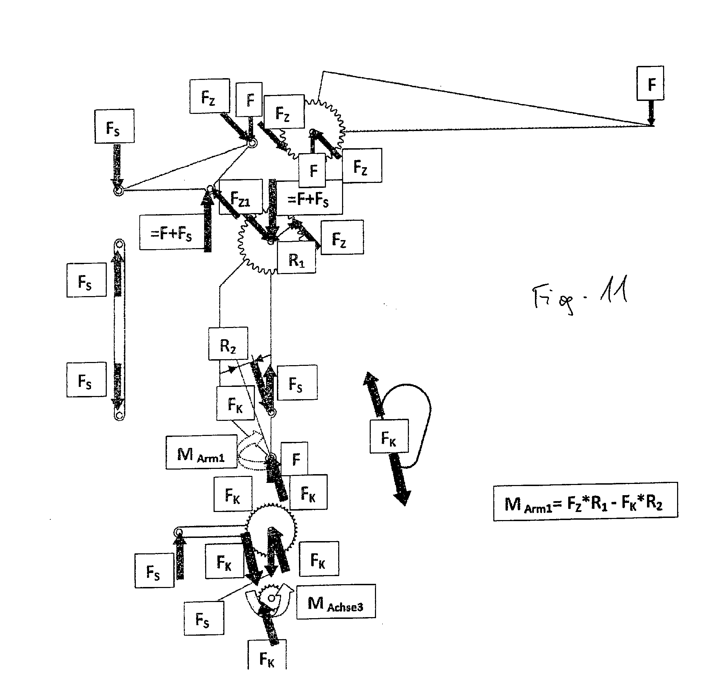

Die Fig. 11 zeigt die Kraft- und Momentenverhältnisse der in Fig. 10 dargestellten Kinematik in einer Darstellung analog der Fig. 9: Die Verhältnisse im oberen Teil der Darstellung entsprechen denen der Fig. 9, die Induktion des Momentes durch den Normalabstand zwischen der Basisachse 3 und der Lenkerachse 23, mit R2 angegeben; ebenso ersichtlich ist das sich aus den Zahnkräften ergebende Moment im Bereich der Armachse 4 mit dem Wirkarm R1.

In Kenntnis diese Zusammenhänge ist es nun in weiteren Ausgestaltungen möglich, den Kraftverlauf bzw. den Momentenverlauf an das jeweilige Einsatzgebiet anzupassen oder, was zumeist angestrebt wird, so auszulegen, dass insbesondere die Spitzen der Belastung minimal werden. Dies ermöglicht es, den Leistungsbedarf und damit die Masse und die Kosten der Antriebe bestmöglich zu minimieren.

Eine vorteilhafte Ausgestaltung besteht auch darin, die Maximalbelastungen für den Antrieb um die Basisachse 3 und den Antrieb um die Armachse 4 so aufeinander abzustimmen, dass sie gleich groß werden, sodass es möglich ist, für beide Antriebe baugleiche Motoren-Getriebe-Einheiten zu verwenden, was für die Planung, die Lagerhaltung und auch die Herstellungskosten vorteilhaft ist. Dazu ist es einerseits möglich, die Übersetzung der Kettenräder an dieses Ziel anzupassen oder die Position ihrer Achsen zu verändern.

Dies ist bezüglich des Steuerrads 19, das mit dem Steuerlenker 18 drehfest verbunden ist, somit bezüglich der Lenkerachse 23 leicht möglich, wenn damit auch aus dem Gelenksparallelogramm ein allgemeines Gelenksviereck wird, dies ist regelungstechnisch leicht beherrschbar. Anders ist dies allerdings bezüglich der Achse des Antriebsrads 20, die immer die Achse 3 sein muss, weil sich bei jeder anderen Positionierung dieser Achse die Relativlage bei einer Bewegung des Basisarms 7 ändern würde, was einerseits Probleme mit der Achsdurchführung macht, andererseits aber, und dies ist noch wesentlicher, den kinematischen Zusammenhang bei einer gleichzeitigen Bewegung des Basisarms 7 und des Endarms 8 (so, dass deren Relativposition unverändert bleibt) empfindlich trifft.

Es ist anhand der bisherigen Ausführungen für den Fachmann klar ersichtlich, dass statt der Zahnräder bzw. Kettenräder samt Riemen bzw. Kette andere Übersetzungen mit linearem Zusammenhang vorgesehen werden können, beispielsweise Zahnradabfolgen, dass dabei auf die Einhaltung der korrekten Drehrichtung zu achten ist, versteht sich von selbst. Es wurde anhand der bisherigen Beschreibung das erfindungsgemäße Prinzip erläutert, ein Verbindungselement 15 zwischen dem Basislenker 17 und dem Endarm 8 vorzusehen, um die Nachteile zu beseitigen, die den parallelen Knickarmrobotern des Standes der Technik anhaften. Dabei wurde wegen der leichten Darstellbarkeit und der nur geringfügigen Änderung der Kinematik zwischen Basisarm 7 und Endarm 8 die Lösung mit der Verzahnung gezeigt.

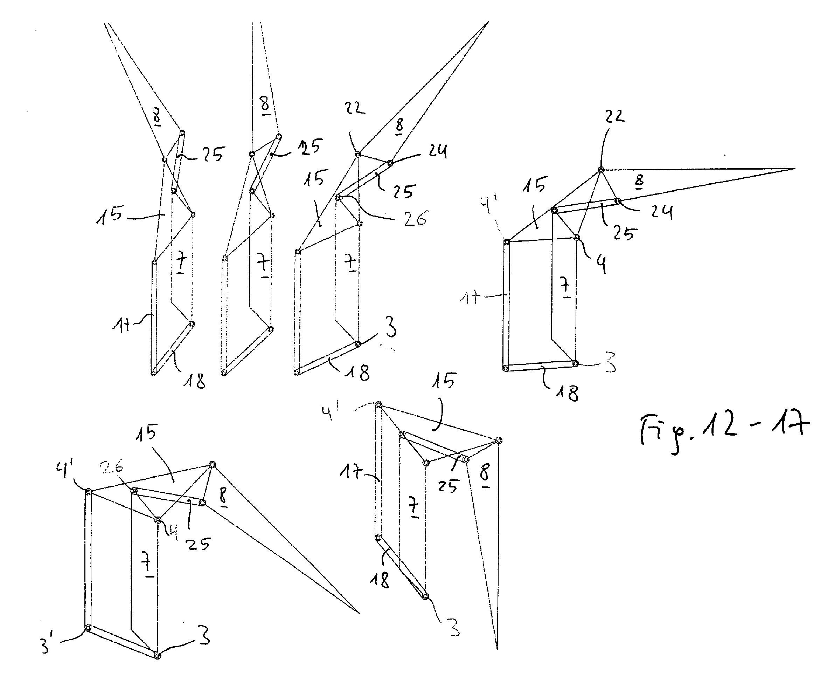

Riemen- bzw. Kettengetriebe gelten als "weich" und damit für Roboter und auch Manipulatoren nur bedingt geeignet, Zahnräder, insbesondere wenn sie hoch belastbar und dabei doch hoch genau sein sollen, sind kostspielig, es ist daher angezeigt, andere Verbindungselemente zu wählen, eines davon ist in den Figs 12 bis 17 dargestellt, nämlich ein Zwischenarm 25 zwischen dem Basisarm 7 und dem Endarm 8:

Die in den Fig. 12 bis 17 schematisch dargestellte Kinematik eines Knickarmroboters weist im Wesentlichen wiederum einen Basisarm 7 auf, der auf der nicht dargstellten Basis 6 um seine Basisachse 3 schwenkbar montiert ist und ein Gelenkparallelogramm, bestehend aus den um die entsprechenden Achsen verschwenkbaren Steuerlenker 18, Basislenker 17 und den einen Schenkel des Verbindungselements 15. Ein dritter Anlenkpunkt am Verbindungselement 15 ist über eine Verbindungsachse 22 schwenkbar mit dem Endarm 8 verbunden, und ein die Zahnräder 11, 12 der Fig. 3 bis 8 ersetzende Zwischenarm 25 ist mit seinem einen Ende mittels einer Zwischenachse 24 am Endarm 8 angelenkt, mit seinem anderen Ende mittels einer Verbindungsachse 22 am Basisarm 7. Die hervorragende Beweglichkeit, die man durch eine solche Anordnung erzielt, ist aus der Zusammenschau der Fig. 12 bis 17 leicht zu erkennen. Dazu kommt, dass die Verbindungselemente allesamt kostengünstige und genau herstellbare, darüber hinaus auch entsprechend leichte (massearme) Stäbe sind, die Lager sind Standardware und ebenfalls entsprechen leicht, hoch belastbar und doch kostengünstig. In Kenntnis der Erfindung ist die für das vorgesehene Anwendungsgebiet bestmögliche Positionierung der Achsen, insbesondere der Steuerachse 26, der Verbindungsachse 22 und der Zwischenachse 24, sowie die Wahl der Länge des Zwischenarms 25 für den Fachmann auf dem Gebiet der ebenen Kinematik leicht möglich. Darüber hinaus kann durch die Abstimmung dieser Elemente die benötigte Leistung der Motoren und Getriebe auf die gewünschte Weise optimiert werden.

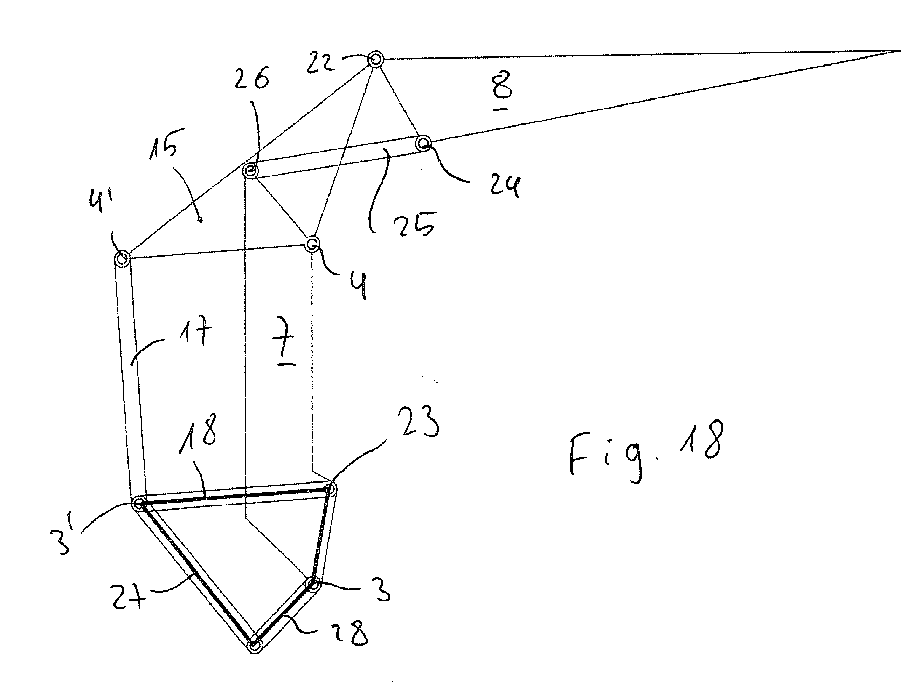

In einer weiteren zentralen Ausgestaltung der Erfindung, die sich insbesondere mit dem Antrieb des Steuerlenkers 18 beschäftigt, wird zu dessen Antrieb statt des aus Fig. 10 ersichtlichen linearen Untersetzungsgetriebes ein Gelenkviereck vorgeschlagen, das den Vorteil aufweist, aus leichten, kostengünstigen, stabilen und doch präzisen Bauteilen zu bestehen. Ein solches Getriebe ist in Fig. 18 beispielhaft und rein schematisch dargestellt. Der Steuerlenker 18 ist am Basisarm 7 um eine Lenkachse 23 schwenkbar angelenkt, an der Basislenkerachse 3' greift nicht nur der Basislenker 17 an, sondern auch eine Treibstange 27, die mittels einer Koppelstange 28, die an der Basisachse 3 gelenkig befestigt ist, sich zu einem Gelenkviereck schließt, als Basis (des Gelenkviereckes, nicht der "drehbaren Basis") kann der am Basisarm 7 gegebene Abstand zwischen der Lenkerachse 23 und der Basisachse 3 angesehen werden.

Auf diese Weise erreicht man ein durch die Längenverhältnisse in weiten Grenzen zu beeinflussendes Getriebe zur Bewegung des Basislenkers 17, damit des Verbindungselements 15 und letztlich des Endarmes 8. All dies bei gleichzeitiger Schaffung eines Momentes auf den Basisarm 7, das dem Moment auf den Basisarm, das durch die Kräfte, die vom Zwischenarm 25 her auf ihn wirken, entgegengesetzt ist und bei passender Wahl der Abstände und der Anordnung der Achsen vollständig aufgehoben werden kann. Ob eine solche vollständige Aufhebung gewünscht ist oder ob man sich mit einer Abschwächung der Wirkung begnügt, hängt vom jeweiligen Anwendungsfall ab und ist für den Fachmann auf dem Gebiete der Knickarmroboter in Kenntnis des Anwendungsgebietes leicht zu treffen.

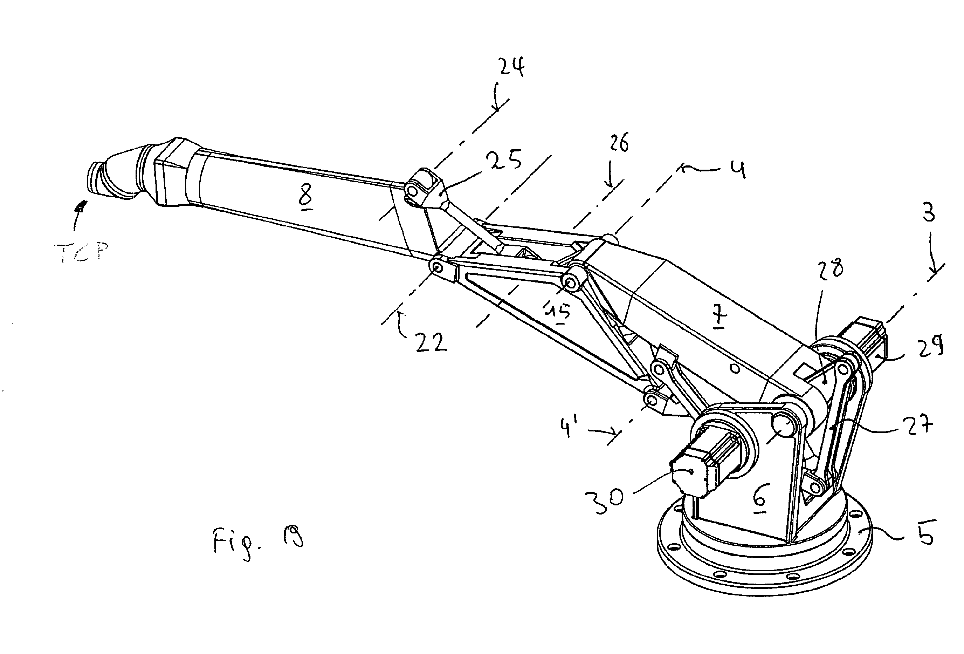

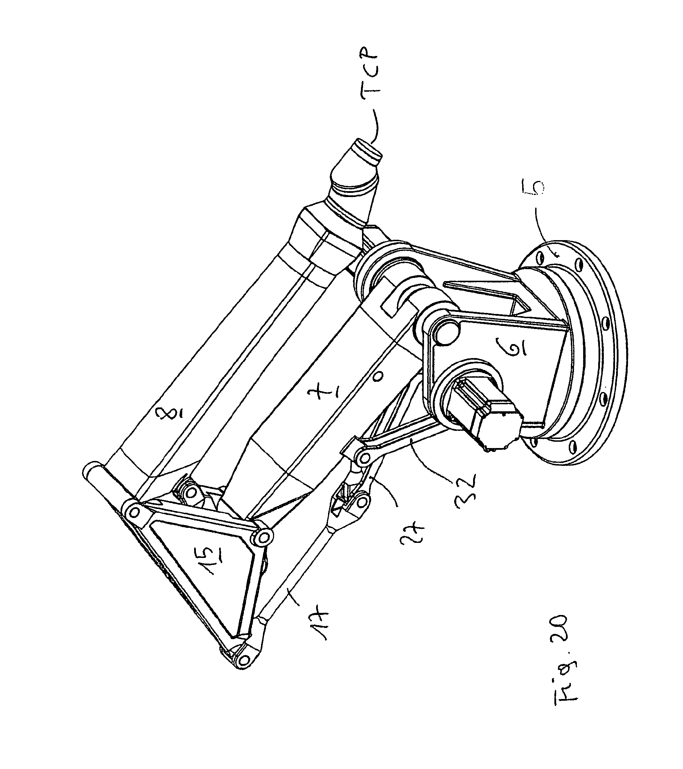

Die Fig. 19 bis 23 zeigen einen durchkonstruierten Knickarmroboter, der im Wesentlichen dem der Fig. 12 bis 17 entspricht, aber noch weitere Besonderheiten aufweist.

Die Fig. 19 zeigt einen solchen Knickarmroboter mit einer festen Basis 5 und einer darauf um eine Hochachse drehbaren Basis 6, die eine Basisachse 3 aufweist um die ein Basisarm 7 verschwenkbar ist. Im Bereich des anderen Endes des Basisarms 7 ist eine Armachse 4 angeordnet, um die ein Verbindungselement 15 schwenkbar gelagert ist. Das Verbindungsgelenk 15 hat im Wesentlichen die Form eines gestreckten Dreieckes, die Armachse 4 ist dabei im Bereich des stumpfen Winkels vorgesehen. An einem der spitzen Winkel ist eine Verbindungsachse 22 vorgesehen, um die der Endarm 8 schwenkbar beweglich ist.

Am Basisarm 7 ist im Bereich seines freien Armes eine Steuerachse 26 angeordnet, an der der Zwischenarm 25 gelenkig angreift. Dieser ist an seinem anderen Ende über eine Zwischenachse 24 mit dem Endarm 8 gelenkig verbunden. Es ist somit das Verbindungselement 15 zwischen dem Basisarm und dem Endarm 8 angeordnet, sodass die oben anhand der schematischen Darstellung erläuterte hohe Beweglichkeit zustande kommt.

Zur Vervollständigung der Kinematik weist das Verbindungselement 15 im Bereich seines zweiten spitzen Winkels eine Armlenkerachse 4' auf, an der das die Bewegung des Endarms 8 um den Basisarm 7 bewerkstelligende Gelenkviereck, das hier in geringem Ausmaß von der Form eines Gelenkparallelogramms abweicht. Zur Vervollständigung dieses Gelenkviereckes dient der Steuerlenker 18. Der Angriffspunkt für den Antrieb für die Bewegung der beiden Armabschnitte zueinander ist nun, so wie in Fig. 18 gezeigt, aufgebaut, die Treibstange 27, aus Symmetriegründen zweigeteilt, greift am Gelenk der Basislenkerachse 3' an. Die Koppelstange 28, die zum Endarmantrieb 29 führt, ist wiederum insbesondere in Fig. 19 gut zu erkennen.

Die Zusammenschau der Fig. 19 bis 23 zeigt die außergewöhnliche Reichweite des TCP, die durch die erfindungsgemäße Anordnung erreicht werden kann, dazu ist noch darauf zu verweisen, dass die verwendeten Lenker, Hebeln, Stangen, etc. nicht nur äußerst kostengünstig sondern auch ausreichend steif für die Verwendung mit Knickarmrobotern sind. Dazu kommt schließlich noch, dass nicht nur wegen der enormen Masseersparnis sondern auch wegen der speziellen Kinematik die Kraft- und Drehmomentverläufe über die einzelnen Positionen deutlich ausgeglichener und insgesamt merklich niedriger sind als im Stand der Technik, sodass die oben genannten Vorteile voll zur Geltung kommen.

In den Fig. 19 bis 23 ist noch eine Ausgestaltung dargestellt, die in den schematischen Darstellungen der vorangehenden Figuren nicht enthalten war, nämlich ein erfindungsgemäßer Antrieb für den Basisarm 7, der die gleichen Vorteile mit sich bringt wie der erfindungsgemäße Antrieb des Endarmes 8:

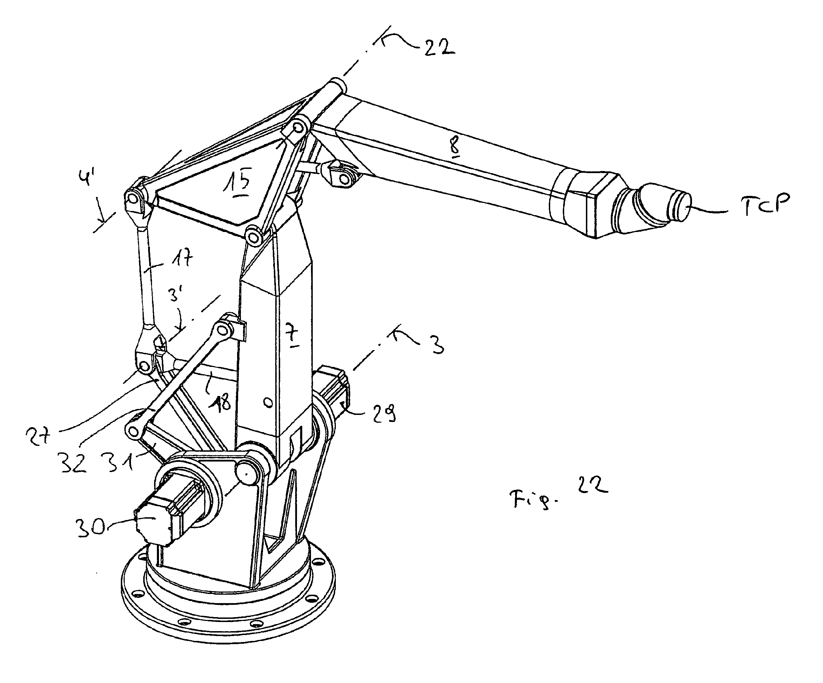

Der Basisarmantrieb 30 ist fest an der drehbaren Basis 6, aber nicht fluchtend mit der Basisachse 3, vorgesehen. Der Basisarmantrieb 30 wirkt auf eine Basiskoppel 31, die in Fig. 22 gut zu sehen ist. Am freien Ende der Basiskoppel 31 greift gelenkig eine Basistreibstange 32 an, die am Basisarm 7 im Abstand von der Basisachse 3 und im Abstand von der Armachse 4 gelenkig angreift. Es bildet somit dieser Antrieb ein Gelenkviereck aus, dessen Eckpunkte die Basisachse 3, die Achse des Motors 30, die Gelenkachse zwischen der Basiskoppel 31 und der Basistreibstange 32 und die Achse des Angriff der Basistreibstange 32 am Basisarm 7 sind.

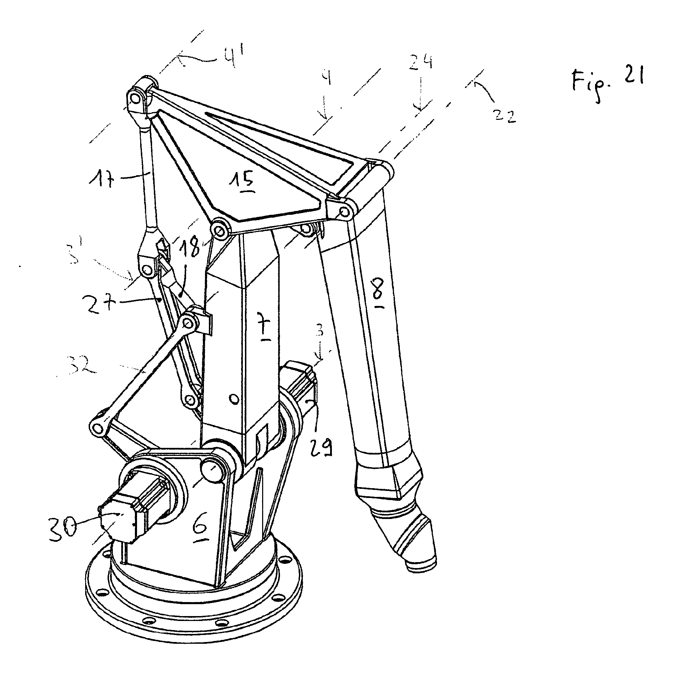

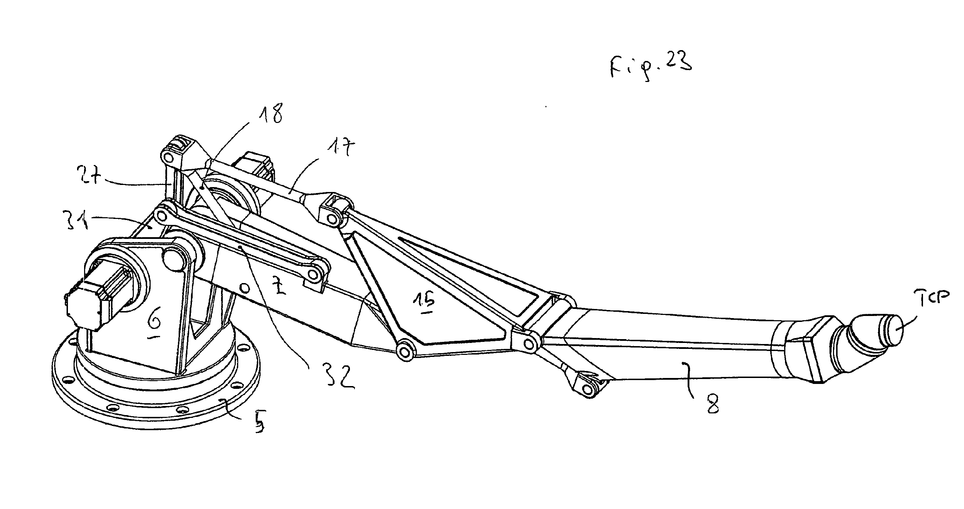

Durch die Wahl passender Abstände dieser Achsen voneinander ist nun möglich die unterschiedliche Belastung des Basisarmantriebs 30, je nach Stellung des Basisarms 7 zumindest wesentlich zu kompensieren und so zu deutlich gleichmäßigeren und insbesondere in ihrer Spitze stark reduzierten Belastungen zu kommen. Um diese unterschiedlichen Belastungen des Basisarmantriebs 30 zu verdeutlichen wird auf die Stellung der Fig. 21 verwiesen, wo die Belastung nur gering ist, während beispielsweise bei den beiden extremen Stellungen der Fig. 19 und der Fig. 23 eine große Momentenbelastung auftritt, wenn bei dieser Betrachtung nur die Masse des Knickarmroboters betrachtet wird oder eine am TCP mit ihrem Gewicht wirkende Masse. In Kenntnis des Arbeitseinsatzes, somit wenn nicht an eine universelle Verwendbarkeit gedacht ist, kann durch die passende Wahl der Abstände der vier genannten Achsen eine sehr wesentliche Reduzierung des gesamten Masse- und Energieaufwands erreicht werden.

Die Erfindung ist nicht auf die dargestellten und beschriebenen Ausführungsbeispiele beschränkt, sondern kann verschiedentlich abgewandelt werden. So können die einzelnen Antriebsarten praktisch frei miteinander kombiniert werden, es kann die Form und Ausbildung der Armabschnitte anders als im dargestellten Ausführungsbeispiel vorgenommen werden, es kann insbesondere das erfindungsgemäß vorgesehene Verbindungselement 15 die unterschiedlichsten Formen aufweisen, bei dem in den Figs. 19 bis 23 dargestellten Ausführungsbeispiel verbindet es eine hohe Steifigkeit in seiner Längsrichtung mit einer, insbesondere bei Arbeitsrobotern auch verlangten, hohen Steifigkeit in Querrichtung, es kann in speziellen Fällen die asymmetrische Belastung des Basisarms 7 durch den anhand der Fig. 19 bis 23 erläuterten Antrieb, der ja asymmetrisch auf den Basisarm wirkt, durch eine Verdoppelung bei entsprechender Verkleinerung der einzelnen Elemente vermieden werden, wobei dann allerdings auf der Seite des Endarmantriebs 29 auch ein zweiter Antrieb vorzusehen wäre. Die asymmetrische Krafteinleitung auf den Basisarm 7 stellt ein wesentlich kleineres und vor allem vollständig beherrschbares Problem im Vergleich zum erzielten Vorteil der Vergleichmäßigung der Momentenbelastung dar.

Die verwendeten Materialien sind dem Fachmann auf dem Gebiete der Knickarmroboter seit langem bekannt und bedürfen hier keiner Erläuterung. Die Auslegung der Bauelemente, der Getriebe und der Antriebe ist für den Fachmann auf diesem technischen Gebiet in Kenntnis der Erfindung ebenfalls ohne Probleme vorzunehmen.

Im Wesentlichen kann man die Erfindung somit etwa folgendermaßen definieren:

Sie betrifft einen Antrieb für die Rotation eines Basisarms 7 eines Knickarmroboters 1 um eine Basisachse 3 einer Basis 6, mit einem Antriebsmotor 30 und gegebenenfalls mit einem Getriebe, dadurch gekennzeichnet, dass der Motor 30 auf der Basis 6 montiert ist und auf eine drehfest mit seiner Abtriebswelle verbundene Basiskoppel 31 wirkt, die gelenkig mit einer Basistreibstange 32 verbunden ist, die gelenkig am Basisarm 7 angreift.

Sie betrifft weiters einen Antrieb für die Rotation eines Endarms 8 eines Knickarmroboters 1 um eine Handachse 4 eines Basisarms 7, mit einem Antriebsmotor 29 und gegebenenfalls mit einem Getriebe, dadurch gekennzeichnet, dass der Motor 29 auf eine, drehfest mit seiner Abtriebswelle, die mit einer Basisachse 3 eines Basisarms 7 fluchtet, verbundenen Koppelstange 28 wirkt, die gelenkig mit einer Treibstange 27 verbunden ist, die, gegebenenfalls über ein Gelenkviereck, am Endarm 8 angreift.

Sie betrifft in einer Ausgestaltung der zweiten Ausführung einen Antrieb, der dadurch gekennzeichnet ist, dass zwischen dem Gelenkviereck und dem Endarm 8 ein Verbindungselement 15 vorgesehen ist, das gelenkig mit dem Endarm 8, dem Basisarm 7 und einem der Stäbe des Gelenkvierecks, dem Basislenker 17 verbunden ist.

Motor, Koppel und Treibstange bilden dabei mit dem jeweiligen, den Motor tragenden Teil ein Gelenkviereck.

## Patentansprüche

1. Knickarmroboter mit einer gegebenenfalls um eine Hochachse drehbaren Basis (6) und einem um eine Basisachse (3) rotierbaren Basisarm (7), mit einem Antrieb für die Rotation des Basisarms, der einen Antriebsmotor (30) und gegebenenfalls ein Getriebe umfasst, **dadurch gekennzeichnet, dass** der Antriebsmotor (30) auf der Basis (6) montiert ist und auf eine drehfest mit seiner Abtriebswelle verbundene Basiskoppel (31) wirkt, die gelenkig mit einer Basistreibstange (32) verbunden ist, die gelenkig am Basisarm (7) angreift.

2. Knickarmroboter mit einer gegebenenfalls um eine Hochachse drehbaren Basis (6) und einem um eine Basisachse (3) rotierbaren Basisarm (7), mit einem um eine Handachse (4) des Basisarms (7), rotierbaren Endarm (8), mit einem Antrieb für die Rotation des Endarmes (8), der einen Antriebsmotor (29) und gegebenenfalls ein Getriebe umfasst, **dadurch gekennzeichnet, dass** der Antriebsmotor (29) auf der Basis (6) montiert ist und auf eine drehfest mit seiner Abtriebswelle, die mit der Basisachse (3) fluchtet, verbundenen Koppelstange (28) wirkt, die gelenkig mit einer Treibstange (27) verbunden ist, die, gegebenenfalls über ein Gelenkviereck, am Endarm (8) angreift.

3. Antrieb nach Anspruch 2, **dadurch gekennzeichnet, dass** zwischen dem Gelenkviereck und dem Endarm (8) ein Verbindungselement (15) vorgesehen ist, das gelenkig mit dem Endarm (8), dem Basisarm (7) und einem der Stäbe des Gelenkvierecks, dem Basislenker (17) verbunden ist.
